# EUROPEAN PATENT SPECIFICATION

(11) **EP 4 266 819 B1**
(45) Date of publication and mention of the grant of the patent: **17.12.2025**
(21) Application number: 21934132.8
(22) Date of filing: 02.04.2021
(51) Int. Cl.: H04W 76/14, H04W 4/40, H04W 76/30, H04W 88/04, H04W 76/19

(54) **RELAY CONNECTION ESTABLISHMENT METHOD, AND DEVICE**
RELAISVERBINDUNGSHERSTELLUNGSVERFAHREN, UND VORRICHTUNG
PROCÉDÉ D'ÉTABLISSEMENT DE CONNEXION RELAIS, ET DISPOSITIF

(43) Date of publication of application: 25.10.2023
(73) Proprietor: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); YANG, Haorui, Dongguan, Guangdong 523860 (CN)
(74) Representative: Novagraaf Technologies
(86) International application number: PCT/CN2021/085459
(87) International publication number: WO 2022/205477

(56) References cited:
- CN-A- 106 162 929
- CN-A- 110 178 441
- US-A1- 2018 279 195
- US-A1- 2019 230 723
- US-A1- 2019 268 964
- US-A1- 2020 100 308
- LEE YOUGDAE ET AL: "RRC CONNECTION ESTABLISHMENT PROCEDURE FOR REMOTE UE", 9 August 2018 (2018-08-09), pages 1 - 48, XP093254956, Retrieved from the Internet <URL:https://patentscope.wipo.int/search/docs2/pct/WO2018143763/pdf/AMKzCnKoPTk1xaQga0FkcyYslVzMWlDv7XH2ylhFdtI> [retrieved on 20250228]
- XIAOMI COMMUNICATIONS: "Open issues on L2 relay", 3GPP DRAFT; R2-2101601, vol. RAN WG2, 15 January 2021 (2021-01-15), pages 1 - 3, XP051974479

## Description

### TECHNICAL FIELD

The disclosure relates to the technical field of Sidelink (SL) transmission, in particular to methods for establishing relay connection and a relay User Equipment (UE).

### BACKGROUND

In a New Radio-Vehicle to Everything (NR-V2X) system, a process of establishing a connection from a User Equipment (UE) to a network device based on a layer 2 relay has not yet been specified.

US 2020/0100308A1 discloses a method and a device for handing of a RRC connection request message of a remote UE by a relay UE in wireless communication system.

US 2019/0230723A1 discloses a method for performing a service request procedure in a wireless communication system and an apparatus therefore.

US 2018/0279195A1 discloses a method for a relay UE to select one of remote UEs when access control is applied due to network congestion. Document Xiaomi communications: "Open issues on L2 relay",3GPP Draft; R2-2101601, vol. RAN WG2, 15 January 2021 (2021-01-15), pages 1-3, discloses that when the remote UE and the relay UE are in non-connected and the remote UE initiates the RRC establishment or resume, the relay UE would also initiate RRC establishment or resume. There are thus two parallel ongoing RRC establishment or resume procedure. It is however impossible to include both requests in one MAC PDU and it's also not possible for relay UE to send request of remote UE before relay UE enters connected. Because this may result in remote UE in connected and relay UE in non-connected, which is not acceptable. Therefore, Relay UE could only send its own request before entering connected and relay the request of remote UE after entering connected. During RRC establishment or resume, UE is expected to include the cause value for gNB to decide whether accept or reject the request. Document US 2019/268964 A1 (LG ELECTRONICS INC.) 29 August 2019 (2019-08-29) discloses that a relay UE receives an RRC connection establishment cause from a remote UE, and performs an RRC connection establishment procedure for the ProSe UE-to-network relay of the remote UE on the basis of the received RRC connection establishment cause.

### SUMMARY

The invention is defined in the independent claims. Additional features of the invention are provided in the dependent claims. Embodiments of the disclosure provide methods for establishing relay connection, a relay UE, and a network device, and specify a process of establishing a connection from a UE to a network device based on a layer 2 relay.

In a first aspect, a method for establishing relay connection is provided as claimed in independent claim 1.

In a second aspect, a method for establishing relay connection is provided as claimed in independent claim 11.

In a third aspect, a method for establishing relay connection is provided as claimed in independent claim 12.

In a fourth aspect, a relay UE is provided as claimed in independent claim 13.

In a fifth aspect, a network device is provided as claimed in independent claim 14.

### BRIEF DESCRIPTION OF THE DRAWINGS

FIG. 1 is a schematic flow diagram of selecting a transmission resource in a first mode according to the disclosure.
FIG. 2 is a schematic flow diagram of selecting a transmission resource in a second mode according to the disclosure.
FIG. 3 is a schematic diagram of a connection establishment flow of a relay network according to an embodiment of the disclosure.
FIG. 4 is a schematic diagram of an optional processing flow of a relay connection establishment method according to an embodiment of the disclosure.
FIG. 5 is a schematic diagram of another optional processing flow of a relay connection establishment method according to an embodiment of the disclosure.
FIG. 6 is a schematic diagram of yet another optional processing flow of a relay connection establishment method according to an embodiment of the disclosure.
FIG. 7 is a schematic diagram of a detailed processing flow of relay connection establishment according to an embodiment of the disclosure.
FIG. 8 is a schematic diagram of an optional composition structure of a relay UE according to an embodiment of the disclosure.
FIG. 9 is a schematic diagram of an optional composition structure of a remote UE according to an embodiment of the disclosure.
FIG. 10 is a schematic diagram of an optional composition structure of a network device according to an embodiment of the disclosure.
FIG. 11 is a schematic diagram of a hardware composition structure of an electronic device according to an embodiment of the disclosure.

### DETAILED DESCRIPTION

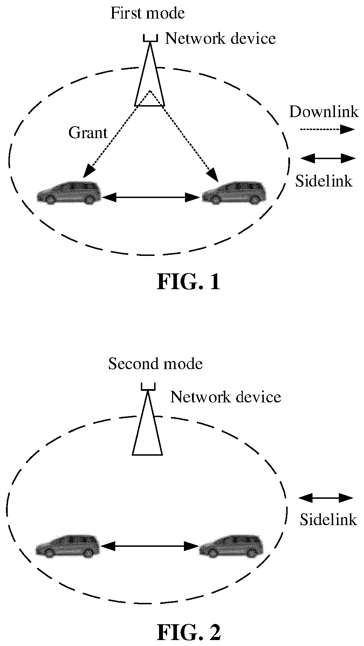

In order to provide a more detailed understanding of the features and technical contents of the embodiments of the disclosure, the implementation of the embodiments of the disclosure will be described in detail below in combination with the drawings, and the accompanying drawings are for illustrative purposes only and are not intended to limit the embodiments of the disclosure. The claimed invention corresponds to fig. 2-4, 6 and to the related text in the description. The remaining figures and the text of the description are intended to better explain the invention.

Before the description of the embodiments of the disclosure, the relevant contents are briefly described.

Device to Device (D2D) communication is an SL-based transmission technology. Different from a manner in a conventional cellular system of receiving or sending communication data through a network device, higher spectral efficiency and lower transmission time delay can be implemented. An Internet of vehicles system adopts a manner of D2D communication (that is, a manner of direct D2D communication). In an NR system, for D2D communication, a Third Generation Partnership Project (3GPP) defines two modes of transmission: a first mode (also called mode A) and a second mode (also called mode B). The first mode is that the network device allocates a transmission resource for a UE, and the second mode is that the UE selects the transmission resource independently.

For the first mode: as shown in FIG. 1, the transmission resource of the UE is allocated by the network device, and the UE sends data on the SL according to the resource allocated by the network device. The network device may allocate the resource for a single transmission to the UE, or may allocate a semi-static transmission resource to the UE.

For the second mode: as shown in FIG. 2, the UE selects one resource from a resource pool for data transmission.

The UE may acquire the transmission resource by using either the first mode or the second mode, or both simultaneously. The acquisition of the transmission resource may be indicated through SL grant. As an example, the SL grant indicates time-frequency locations of corresponding Physical Sidelink Control Channel (PSCCH) resource and Physical Sidelink Shared Channel (PSSCH) resource.

In NR V2X, the UE may independently initiate Hybrid Automatic Repeat Request (HARQ) retransmission. As an example, feedback-based HARQ retransmission may be introduced in both unicast communication and multicast communication in NR V2X.

In 3GPP Rel 12/13, for a Proximity based Service (ProSe), it can be implemented that the UE sends and/or receives data discontinuously on the SL by configuring the location of the resource pool in a time domain, for example, the resource pool is discontinuous in the time domain, thereby achieving the effect of power saving.

In R14/15, the Internet of vehicles system has requirements for a vehiclevehicle communication scenario, which is mainly for relatively high-speed moving vehiclevehicle and vehicle-person communication services.

In a V2X system, an on-board system has continuous power supply, so that data transmission delay is the main problem to be solved. Therefore, continuous transmission and reception of the UE is required in system design.

In R14, a scenario that a wearable device (FeD2D) accesses a network through a mobile phone is studied, especially for scenarios with low mobile speed and low power access. For FeD2D, the network device may configure Discontinuous Reception (DRX) parameters of a remote terminal through a relay terminal.

A connection establishment process of the UE is briefly described below.

Before the UE initiates a call, access control is performed first. From the perspective of an executor, the access control may be classified into two types: the first is performed by the UE itself, which is collectively referred to as Unified Access Control (UAC) in the NR system, and the second is performed by the network device according to a "Radio Resource Control (RRC) establishment cause" in an RRC setup request (SetupRequest) message. The key of the second access control is that a Non Access Stratum (NAS) of the UE may obtain the "RRC establishment cause" according to the mapping of an access identifier and an access category while initiating the call. The "RRC establishment cause" is encoded in the RRCSetupRequest message by the RRC layer and sent to the network device. How the network device performs access control according to the "RRC establishment cause" is an internal algorithm of the network device, which is implemented by the network device. If the network device accepts the RRCSetupRequest message initiated by the UE, the network device sends the RRCSetup message for response, otherwise the network device sends an RRCReject (RRC reject) message for rejection.

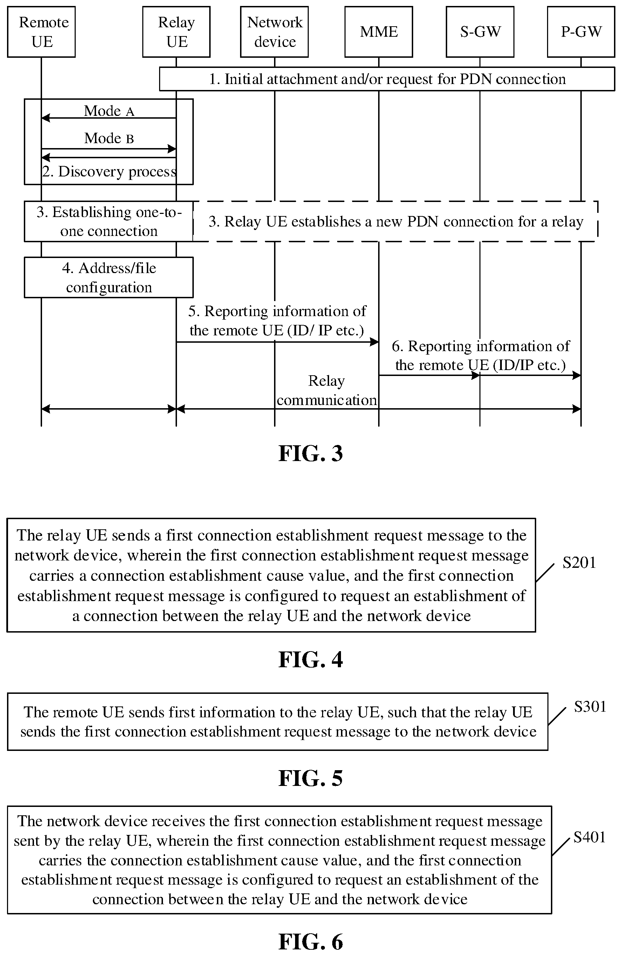

A UE-to-network relay function based on a layer 3 relay is introduced in R13, that is, the remote UE accesses the network through the relay UE. The relay UE performs the relay function of an Internet Protocol (IP) layer, and transmits data between the remote UE and the network device. The remote UE is connected with the relay UE through the SL. A connection establishment flow of the relay network may be shown in FIG. 3: in step 5, the relay UE reports an Identification (ID) and IP information of the remote UE to the network device, the network device learns the association between the relay UE and the remote UE according to the reported message, so that corresponding bearer/session management and configuration is performed, thereby enabling the remote UE to be connected to the network through the relay UE.

For a UE-to-network relay function based on the layer 2 relay, the remote UE accesses the network through the relay UE. The relay UE performs the relay function of an adaption layer, and transmits data between the remote UE and the network device. The remote UE is connected with the relay UE through the SL. The adaption layer is above a Radio Link Control (RLC) layer and below a Packet Data Convergence Protocol (PDCP) layer. However, the UE-to-network connection establishment process based on the layer 2 relay has not been specified in related technologies.

It is to be understood that the sequence numbers of the implementation processes do not mean execution sequences in various embodiments of the disclosure. The execution sequences of the processes should be determined according to functions and internal logics of the processes, and should not be construed as any limitation to the implementation processes of the embodiments of the disclosure.

The embodiments of the disclosure provide a method for establishing relay connection, which specifies a connection establishment process in a layer 2 relay.

The processing flow of a relay connection establishment method according to the claimed invention, as shown in FIG. 4, includes the step S201.

At step S201, a relay UE sends a first connection establishment request message to a network device, the first connection establishment request message carries a connection establishment cause value, and the first connection establishment request message is configured to request the establishment of a connection between the relay UE and the network device.

In some embodiments, if the relay UE needs to act as the relay of uplink transmission for the remote UE, or the relay UE needs to act as the relay of downlink transmission for the network device, the relay UE needs to be in an RRC connected state. As an example, the relay UE sends an RRCSetupRequest message to the network device.

In some embodiments, the connection establishment cause value (establishmentCause) may be "relay", namely "establishmentCause=ralay", which represents that the connection requested to be established is used for the relay that performs the transmission. In the embodiments of the disclosure, the specific form and content of the connection establishment cause value are not limited.

In the claimed invention, the connection establishment cause value is sent to the relay UE by the remote UE. The connection establishment cause value is sent to an Access Stratum (AS) entity of the relay UE by the remote UE. Or, the connection establishment cause value is determined by the AS entity of the relay UE according to a protocol. As an example, the connection establishment cause value corresponds to a relay manner of the relay UE, for example, a relay based on layer 2 corresponds to a connection establishment cause value of 1, and a relay based on layer 3 corresponds to a connection establishment cause value of 2. Or, the connection establishment cause value is sent to an NAS entity of the relay UE by the remote UE, and then sent to the AS entity of the relay UE by the NAS entity. Or, the connection establishment cause value is determined by the NAS entity of the relay UE according to the protocol, and then sent to the AS entity of the relay UE by the NAS entity.

The method further includes step S202.

At step S202, the relay UE receives first information sent by the remote UE.

The first information is an RRC message. The remote UE sends the RRC message to the relay UE, and the RRC message carries the connection establishment cause value.

The first information is an indication information that triggers the relay UE to establish an RRC connection with the network device, and the indication information that triggers the relay UE to establish the RRC connection with the network device carries the connection establishment cause value. The remote UE sends the indication information to the relay UE, and the indication information is configured to instruct the relay UE to establish the RRC connection with the network device. The relay UE, after receiving the indication information, sends the first connection establishment request message to the network device. In this scenario, the relay UE needs to fill the connection establishment cause value in the first connection establishment request message.

In some embodiments, the method may further include step S203.

At step S203, a prose layer entity or a PC5-RRC layer entity of the relay UE sends a notification message to the NAS entity. The notification message is configured to notify the NAS entity to establish an NAS connection.

In some embodiments, the NAS entity of the relay UE passes the *establishmentCause* value to the AS entity of the relay UE and triggers the AS entity of the relay UE to establish the RRC connection. The AS entity of the relay UE fills in the RRC connection establishment request message.

In some embodiments, the method may further include step S204.

At step S204, the relay UE receives connection establishment success indication information sent by the network device.

In some embodiments, the connection establishment success indication information is configured to indicate that the relay UE is successfully connected with the network device.

In some embodiments, the method may further include step S205.

At step S205, the relay UE sends the connection establishment success indication information to the remote UE.

In some embodiments, if the relay UE is successfully connected with the network device, the method may further include step S206.

At step S206, the relay UE sends first indication information to the network device. The first indication information is configured to indicate related information of an SL between the relay UE and the remote UE.

In some embodiments, the related information of the SL between the relay UE and the remote UE may include at least one of the following:

Quality of Service (QoS) parameters and QoS profile(s) related to NR sidelink communication, a sidelink radio link failure or sidelink RRC reconfiguration failure has been detected, the sidelink UE capability information of the associated peer UE for unicast communication, or the RLC mode information of the sidelink data radio bearer(s) received from the associated peer UE for unicast communication.

In some embodiments, the method may further include step S207.

At step S207, the relay UE receives first configuration information sent by the network device. The first configuration information is used for the relay UE and the remote UE to transmit information.

In some embodiments, the first configuration information may be configuration information used for transmission between the relay UE and the remote UE. As an example, the first configuration information may be a time-frequency resource used for the transmission performed by the relay UE and the remote UE.

In some embodiments, if the relay UE is successfully connected with the network device, the method may further include step S208.

At step S208, the relay UE forwards at least one of the first information, second information, third information, or fourth information to the network device.

In some embodiments, the relay UE receives the first information sent by the remote UE, and the relay UE forwards the first information to the network device.

In some embodiments, the relay UE sends the second information to the network device, and the second information is obtained by mapping the first information through an adaption layer of the relay UE.

In some embodiments, the relay UE receives the third information sent by the remote UE, and the relay UE forwards the third information to the network device.

In some embodiments, the relay UE receives the fourth information sent by the network device, and the relay UE forwards the fourth information to the remote UE.

In some embodiments, both the third information and the fourth information may be RRC messages.

In some embodiments, the relay UE transmits the third information and/or the fourth information between the network device and the remote UE based on the layer 2 relay and the SL.

In some embodiments, the method may further include step S209.

At step S209, the relay UE receives connection establishment failure indication information sent by the network device.

In some embodiments, the connection establishment failure indication information is configured to indicate the cause of the connection failure between the relay UE and the network device. As an example, the connection establishment failure indication information may also be referred to as connection establishment rejection information.

In some embodiments, the cause of the connection failure between the relay UE and the network device may be that the priority of the relay UE is low, the network device does not support the relay, or the number of relay UEs that have established a relay connection with the network device reaches a threshold value.

In some embodiments, the method may further include step S210.

At step S210, the relay UE sends the connection establishment failure indication information to the remote UE.

In some embodiments, the relay UE sends the connection establishment failure indication information to the remote UE for informing the remote UE that the relay connection establishment fails.

In the embodiments of the disclosure, the relay UE establishes the connection with the network device by using the layer 2 relay. The remote UE establishes the connection with the relay UE through the SL.

Another processing flow of a relay connection establishment method according to the claimed invention, as shown in FIG. 5, includes the following steps.

At step S301, a remote UE sends first information to a relay UE, so that the relay UE sends a first connection establishment request message to a network device.

The first information is an RRC message. The remote UE sends the RRC message to the relay UE, and the RRC message carries a connection establishment cause value.

The first information is an indication information that triggers the relay UE to establish an RRC connection with the network device. The remote UE sends the indication information to the relay UE, the indication information is configured to instruct the relay UE to establish the RRC connection with the network device, and the indication information carries the connection establishment cause value. The relay UE, after receiving the indication information, sends the first connection establishment request message to the network device.

In some embodiments, the connection establishment cause value (establishmentCause) may be "relay", namely "establishmentCause=ralay", which represents that the connection requested to be established is used for the relay that performs the transmission. In the embodiments of the disclosure, the specific form and content of the connection establishment cause value are not limited.

In some embodiments, the connection establishment cause value may be sent to the relay UE by the remote UE. As an example, the connection establishment cause value may be sent to an AS entity or an NAS entity of the relay UE by the remote UE. As an example, the connection establishment cause value corresponds to a relay manner of the relay UE, for example, a relay based on layer 2 corresponds to a connection establishment cause value of 1, and a relay based on layer 3 corresponds to a connection establishment cause value of 2. Or, the connection establishment cause value may be sent to the NAS entity of the relay UE by the remote UE, and then sent to the AS entity of the relay UE by the NAS entity. Or, the connection establishment cause value is determined by the NAS entity of the relay UE according to the protocol, and then sent to the AS entity of the relay UE by the NAS entity.

The method further includes step S302.

At step S302, the remote UE sends the connection establishment cause value to the relay UE.

In some embodiments, the method may further include step S303.

At step S303, the remote UE receives connection establishment success indication information sent by the relay UE.

The connection establishment success indication information is configured to indicate that the relay UE is successfully connected to the network device.

In some embodiments, if the relay UE is successfully connected to the network device, the method may further include the following operation.

At step S304, the remote UE sends third information to the relay UE, and the third information is sent to the network device through the relay UE.

In some embodiments, if the relay UE is successfully connected to the network device, the method may further include the following operation.

At S305, the remote UE receives fourth information sent by the relay UE, and the fourth information is sent to the relay UE by the network device.

In steps S304 to S305, the relay UE transmits the third information and/or the fourth information between the network device and the remote UE based on a layer 2 relay and an SL.

In some embodiments, the method may further include the following operation.

At step S306, the remote UE receives connection establishment failure indication information sent by the relay UE.

In some embodiments, the connection establishment failure indication information is configured to indicate the cause of the connection failure between the remote UE and the network device.

In the embodiments of the disclosure, the relay UE establishes the connection with the network device by using the layer 2 relay. The remote UE establishes the connection with the relay UE through the SL.

Another processing flow of a relay connection establishment method according to the claimed invention, as shown in FIG. 6, includes the following step.

At step S401, a network device receives a first connection establishment request message sent by a relay UE, the first connection establishment request message carries a connection establishment cause value, and the first connection establishment request message is configured to request the establishment of a connection between the relay UE and the network device.

In some embodiments, if the relay UE needs to act as the relay of uplink transmission for the remote UE, or the relay UE needs to act as the relay of downlink transmission for the network device, the relay UE needs to be in an RRC connected state. The relay UE sends an RRCSetupRequest message to the network device.

In some embodiments, the connection establishment cause value (establishmentCause) may be "relay", namely "establishmentCause=ralay", which represents that the connection requested to be established is used for the relay that performs the transmission. In the embodiments of the disclosure, the specific form and content of the connection establishment cause value are not limited.

The connection establishment cause value is sent to the relay UE by the remote UE. The connection establishment cause value is sent to an AS entity of the relay UE by the remote UE. Or, the connection establishment cause value may be determined by the AS entity of the relay UE according to a protocol. As an example, the connection establishment cause value corresponds to a relay manner of the relay UE, for example, a relay based on layer 2 corresponds to a connection establishment cause value of 1, and a relay based on layer 3 corresponds to a connection establishment cause value of 2. Or, the connection establishment cause value may be sent to an NAS entity of the relay UE by the remote UE, and then sent to the AS entity of the relay UE by the NAS entity. Or, the connection establishment cause value is determined by the NAS entity of the relay UE according to the protocol, and then sent to the AS entity of the relay UE by the NAS entity.

The method further includes the following operation.

At step S402, the network device receives first information sent by the relay UE. Or, the network device receives second information sent by the relay UE based on the first information.

The first information is sent to the relay UE by the remote UE.

The first information may be an RRC message. The remote UE sends the RRC message to the relay UE, and the RRC message carries the connection establishment cause value.

The first information is an indication information that triggers the relay UE to establish an RRC connection with the network device. The remote UE sends the indication information to the relay UE, the indication information is configured to instruct the relay UE to establish the RRC connection with the network device, and the indication information carries the connection establishment cause value. The relay UE, after receiving the indication information, sends the first connection establishment request message to the network device.

In some embodiments, the method may further include the following operation.

At step S403, the network device determines whether to establish the connection between the network device and the relay UE based on the first connection establishment request message.

In some embodiments, the network device may determine whether to establish a connection between the network device and the relay UE according to the connection establishment cause value carried in the first connection establishment request message. As an example, if the connection establishment cause value is "relay" and the network device supports the relay, the network device establishes the connection between the network device and the relay UE. As an example, if the connection establishment cause value is "relay" and the network device does not support the relay, the network device does not establish the connection between the network device and the relay UE.

In some embodiments, if the network device determines to establish the connection between the network device and the relay UE in step S403, the method may further include the following operation.

At step S404, the network device sends connection establishment success indication information to the relay UE.

In some embodiments, the connection establishment success indication information is configured to indicate that the relay UE is successfully connected to the network device.

In some embodiments, the method may further include the following operation.

At step S405, the network device receives first indication information sent by the relay UE. The first indication information is configured to indicate related information of an SL between the relay UE and the remote UE.

In some embodiments, the related information of the SL between the relay UE and the remote UE may include at least one of the following:

QoS parameters and QoS profile(s) related to NR sidelink communication, a sidelink radio link failure or sidelink RRC reconfiguration failure has been detected, the sidelink UE capability information of the associated peer UE for unicast communication, or the RLC mode information of the sidelink data radio bearer(s) received from the associated peer UE for unicast communication.

In some embodiments, the method may further include the following operation.

At step S406, the network device sends first configuration information to the relay UE, and the first configuration information is used for the relay UE and the remote UE to transmit information.

In some embodiments, the first configuration information may be configuration information used for transmission between the relay UE and the remote UE. As an example, the first configuration information may be a time-frequency resource used for the transmission performed by the relay UE and the remote UE.

In some embodiments, if the relay UE is successfully connected to the network device, the method may further include the following operation.

At step S407, the network device receives the first information forwarded by the relay UE; or, the network device receives the second information obtained by the relay UE based on the first information; or, the network device receives third information sent by the relay UE, and the third information is sent to the relay UE by the remote UE.

In some embodiments, the first information may be sent to the relay UE by the remote UE before performing step S401. The first information may also be sent to the relay UE by the remote UE after the relay UE establishes the connection with the network device.

In some embodiments, the third information includes an RRC message.

In some embodiments, if the relay UE is successfully connected with the network device, the method may further include the following operation.

At step S408, the network device sends fourth information to the relay UE, and the fourth information is sent to the remote UE through the relay UE.

In some embodiments, the fourth information includes an RRC message.

In steps S407 and S408, the relay UE transmits at least one of the first information, the second information, the third information, or the fourth information between the network device and the remote UE based on a layer 2 relay and an SL.

In some embodiments, if the network device determines to establish the connection between the network device and the relay UE in step S403, the method may further include the following operation.

At S409, the network device sends connection establishment failure indication information to the relay UE.

In some embodiments, the connection establishment failure indication information is configured to indicate the cause of the connection failure between the remote UE and the network device. As an example, the connection establishment failure indication information may also be referred to as connection establishment rejection information.

In the embodiments of the disclosure, the relay UE establishes the connection with the network device by using the layer 2 relay. The remote UE establishes the connection with the relay UE through the SL.

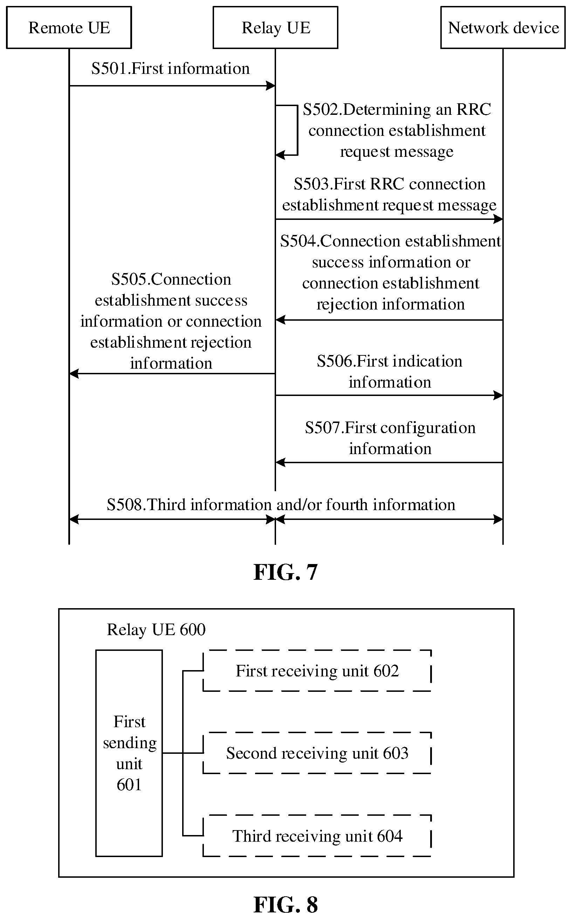

In embodiments of the disclosure, a detailed processing flow of relay connection establishment, as shown in FIG. 7, includes the following operations.

At step S501, a remote UE sends first information to a relay UE.

In some embodiments, the description of the first information is the same as the description of the first indication information in the above embodiments and will not be elaborated here.

At step S502, the relay UE determines an RRC connection establishment request message.

In some embodiments, the relay UE fills a connection establishment cause value in the RRC connection establishment request message.

In some embodiments, the connection establishment cause value may be sent to the relay UE by the remote UE. As an example, the connection establishment cause value may be sent to an AS entity of the relay UE by the remote UE. Or, the connection establishment cause value may be determined by the AS entity of the relay UE according to a protocol. As an example, the connection establishment cause value corresponds to a relay manner of the relay UE, for example, a relay based on layer 2 corresponds to a connection establishment cause value of 1, and a relay based on layer 3 corresponds to a connection establishment cause value of 2. Or, the connection establishment cause value may be sent to an NAS entity of the relay UE by the remote UE, and then sent to the AS entity of the relay UE by the NAS entity. Or, the connection establishment cause value is determined by the NAS entity of the relay UE according to the protocol, and then sent to the AS entity of the relay UE by the NAS entity.

At step S503, the relay UE sends the first connection establishment request message to a network device.

At step S504, the network device sends connection establishment success information or connection establishment rejection information to a UE.

At step S505, the relay UE sends the connection establishment success information or the connection establishment rejection information to the remote UE.

At step S506, after the relay UE receives the connection establishment success information, the relay UE sends first indication information to the network device. The first indication information is configured to indicate related information of an SL between the relay UE and the remote UE.

In some embodiments, the related information of the SL between the relay UE and the remote UE may include at least one of the following:

QoS parameters and QoS profile(s) related to NR sidelink communication, a sidelink radio link failure or sidelink RRC reconfiguration failure has been detected, the sidelink UE capability information of the associated peer UE for unicast communication, or the RLC mode information of the sidelink data radio bearer(s) received from the associated peer UE for unicast communication.

At step S507, the network device receives first configuration information sent to the relay UE, and the first configuration information is used for the relay UE and the remote UE to transmit information.

In some embodiments, the first configuration information may be configuration information used for transmission between the relay UE and the remote UE. As an example, the first configuration information may be a time-frequency resource used for the transmission performed by the relay UE and the remote UE.

At S508, the relay UE is in a connected state after receiving the connection establishment success information. The relay UE may perform at least one of the following information forwarding operation that: the relay UE forwards the first information to the network device for the remote UE; the relay UE sends second information to the network device based on the first information; the remote UE sends third information to the relay UE, and the relay UE sends the third information to the network device; and the network device sends fourth information to the relay UE, or the relay UE forwards the fourth information to the remote UE.

The above embodiments of the disclosure specify a connection establishment process from the remote UE to the network device based on a layer 2 relay. The remote UE establishes the connection with the relay UE based on an SL, and the relay UE establishes the connection with the network device based on the layer 2 relay. The embodiments of the disclosure also specify the acquisition manner of the connection establishment cause value carried in the connection establishment request message which is sent to the network device by the relay UE. As an example, the connection establishment cause value is sent to the AS entity of the relay UE by the remote UE; or, the connection establishment cause value is determined by the AS entity of the relay UE according to the protocol; or, the connection establishment cause value is sent to the NAS entity of the relay UE by the remote UE, and then sent to the AS entity of the relay UE by the NAS entity; or, the connection establishment cause value is determined by the NAS entity of the relay UE according to the protocol, and then sent to the AS entity of the relay UE by the NAS entity.

In order to implement the relay connection establishment method provided by the embodiments of the disclosure, the embodiments of the disclosure also provide a relay UE. The structure of the claimed relay UE 600, as shown in FIG. 8, includes a first sending unit 601.

The first sending unit 601 is configured to send a first connection establishment request message to a network device.

The first connection establishment request message carries a connection establishment cause value, and the first connection establishment request message is configured to request the establishment of a connection between the relay UE and the network device.

The relay UE 600 further includes a first receiving unit 602.

The first receiving unit 602 is configured to receive first information sent by a remote UE.

The first information includes an RRC message or indication information that triggers the relay UE to establish an RRC connection with the network device.

The connection establishment cause value is sent to an AS entity of the relay UE by the remote UE.

Or, the connection establishment cause value is determined by the AS entity of the relay UE according to a protocol.

Or, the connection establishment cause value is sent to an NAS entity of the relay UE by the remote UE, and then sent to the AS entity of the relay UE by the NAS entity.

Or, the connection establishment cause value is determined by the NAS entity of the relay UE according to the protocol, and then sent to the AS entity of the relay UE by the NAS entity.

In some embodiments, a prose layer entity or a PC5-RRC layer entity of the relay UE sends a notification message to the NAS entity. The notification message is configured to notify the NAS entity to establish an NAS connection.

In some embodiments, the connection establishment cause value corresponds to a relay manner of the relay UE.

In some embodiments, the relay UE 600 further includes a second receiving unit 603.

The second receiving unit 603 is configured to receive connection establishment success indication information sent by the network device.

In some embodiments, the first sending unit 601 is further configured to send the connection establishment success indication information to the remote UE.

In some embodiments, the connection establishment success indication information is configured to indicate that the relay UE is successfully connected to the network device.

In some embodiments, the first sending unit 601 is further configured to send first indication information to the network device. The first indication information is configured to indicate related information of an SL between the relay UE and the remote UE.

In some embodiments, the second receiving unit 603 is further configured to receive first configuration information sent by the network device. The first configuration information is used for the relay UE and the remote UE to transmit information.

In some embodiments, the first sending unit 601 is further configured to send the first information to the network device.

Or, the relay UE sends second information to the network device based on the first information.

In some embodiments, the second information includes an RRC message.

In some embodiments, the first receiving unit 602 is configured to receive third information sent by the remote UE, and the relay UE sends the third information to the network device; and/or

the first receiving unit 602 is configured to receive fourth information sent by the network device, and the relay UE sends the fourth information to the remote UE.

In some embodiments, the third information includes an RRC message; and/or, the fourth information includes an RRC message.

In some embodiments, the first receiving unit 602 is configured to receive connection establishment failure indication information sent by the network device.

In some embodiments, the first sending unit 601 is further configured to send the connection establishment failure indication information to the remote UE.

In some embodiments, the connection establishment failure indication information is configured to indicate the cause of the connection failure between the relay UE and the network device.

In some embodiments, the relay UE adopts a manner of a layer 2 relay to establish the connection with the network device; and/or, the remote UE establishes a connection with the relay UE through the SL.

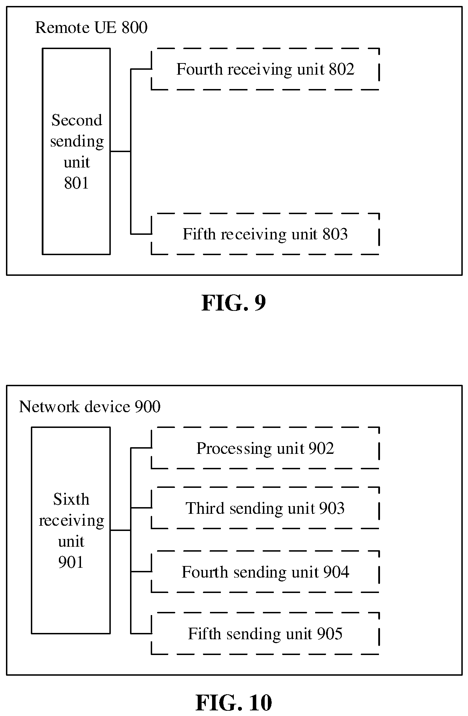

In order to implement the relay connection establishment method provided by the embodiments of the disclosure, the embodiments of the disclosure also provide a remote UE. An optional composition structure of the remote UE 800, as shown in FIG. 9, includes a second sending unit 801.

The second sending unit 801 is configured to send first information to a relay UE, such that the relay UE sends a first connection establishment request message to a network device.

In some embodiments, the second sending unit 801 is further configured to send a connection establishment cause value to the remote UE.

In some embodiments, the connection establishment cause value may be sent to an NAS entity of the relay UE by the remote UE.

Or, the connection establishment cause value may be sent to an AS entity of the UE by the remote UE.

In some embodiments, the remote UE 800 further includes a fourth receiving unit 802, configured to receive connection establishment success indication information sent by the relay UE.

In some embodiments, the connection establishment success indication information is configured to indicate that the relay UE is successfully connected to the network device.

In some embodiments, the second sending unit is configured to send third information to the relay UE, and the third information is sent to the network device through the relay UE.

In some embodiments, the fourth receiving unit 802 is configured to receive fourth information sent by the relay UE, and the fourth information is sent to the relay UE by the network device.

In some embodiments, the remote UE 800 further includes a fifth receiving unit 803.

The fifth receiving unit 803 is configured to receive connection establishment failure indication information sent by the relay UE.

In some embodiments, the connection establishment failure indication information is configured to indicate the cause of the connection failure between the remote UE and the network device.

In some embodiments, the connection establishment cause value corresponds to a relay manner of the relay UE.

In some embodiments, the first information includes an RRC message or indication information that triggers the relay UE to establish an RRC connection with the network device.

In some embodiments, the relay UE adopts a manner of a layer 2 relay to establish the connection with the network device; and/or, the remote UE establishes a connection with the relay UE through an SL.

In order to implement the relay connection establishment method provided by the embodiments of the disclosure, the embodiments of the disclosure also provide a remote UE. Optional composition structure of the network device 900, as shown in FIG. 10, includes a sixth receiving unit 901.

The sixth receiving unit 901 is configured to receive a first connection establishment request message sent by a relay UE. The first connection establishment request message carries a connection establishment cause value, and the first connection establishment request message is configured to request the establishment of a connection between the relay UE and the network device.

In some embodiments, the connection establishment cause value is sent to an AS entity of the relay UE by the remote UE.

Or, the connection establishment cause value is determined by the AS entity of the relay UE according to a protocol.

Or, the connection establishment cause value is sent to an NAS entity of the relay UE by the remote UE, and then sent to the AS entity of the relay UE by the NAS entity.

Or, the connection establishment cause value is determined by the NAS entity of the relay UE according to the protocol, and then sent to the AS entity of the relay UE by the NAS entity.

In some embodiments, the network device 900 further includes a processing unit 902.

The processing unit 902 is configured to determine whether to establish the connection between the network device and the relay UE based on the first connection establishment request message.

In some embodiments, the network device 900 further includes a third sending unit 903.

The third sending unit 903 is configured to send connection establishment failure indication information to the relay UE.

In some embodiments, the connection establishment success indication information is configured to indicate that the relay UE is successfully connected with the network device.

In some embodiments, the sixth receiving unit 901 is further configured to receive first indication information sent by the relay UE. The first indication information is configured to indicate related information of an SL between the relay UE and the remote UE.

In some embodiments, the network device 900 further includes a fourth sending unit 904.

The fourth sending unit 904 is configured to send first configuration information to the relay UE. The first configuration information is used for the relay UE and the remote UE to transmit information.

In some embodiments, the sixth receiving unit 901 is configured to receive the first information sent by the relay UE;

or, receive second information which is sent by the relay UE based on the first information.

In some embodiments, the first information is sent to the relay UE by the remote UE.

In some embodiments, the second information includes an RRC message.

In some embodiments, the sixth receiving unit is further configured to receive third information sent by the relay UE, and the third information is sent to the relay UE by the remote UE.

The third sending unit is further configured to send fourth information to the relay UE, and the fourth information is sent to the remote UE through the relay UE.

In some embodiments, the third information includes an RRC message; and/or, the fourth information includes an RRC message.

In some embodiments, the network device 900 further includes a fifth sending unit 905.

The fifth sending unit 905 is configured to send connection establishment failure indication information to the relay UE.

In some embodiments, the connection establishment failure indication information is configured to indicate the cause of the connection failure between the remote UE and the network device.

In some embodiments, the connection establishment cause value corresponds to a relay manner of the relay UE.

In some embodiments, the relay UE adopts a manner of a layer 2 relay to establish the connection with the network device; and/or, the remote UE establishes a connection with the relay UE through the SL.

The embodiments of the disclosure also provide a relay UE, which includes a processor and a memory. The memory is configured to store a computer program runnable on the processor. The processor is configured to run the computer program to perform the steps of the method for establishing relay connection performed by the above relay UE.

The embodiments of the disclosure also provide a remote UE, which includes a processor and a memory. The memory is configured to store a computer program runnable on the processor. The processor is configured to run the computer program to perform the steps of the method for establishing relay connection performed by the above remote UE.

The embodiments of the disclosure also provide a network device, which includes a processor and a memory. The memory is configured to store a computer program runnable on the processor. The processor is configured to run the computer program to perform the steps of the method for establishing relay connection performed by the above network device.

The embodiments of the disclosure also provide a chip, which includes a processor, configured to call and run a computer program from a memory to cause a relay UE installed with the chip to perform the method for establishing relay connection performed by the above sending device.

The embodiments of the disclosure also provide a chip, which includes a processor, configured to call and run a computer program from a memory to cause a remote UE installed with the chip to perform the method for establishing relay connection performed by the above receiving device.

The embodiments of the disclosure also provide a chip, which includes a processor, configured to call and run a computer program from a memory to cause a remote UE installed with the chip to perform the method for establishing relay connection performed by the above network device.

The embodiments of the disclosure also provide a storage medium, storing an executable program. The executable program implements the method for establishing relay connection performed by the above relay UE when being executed by a processor.

The embodiments of the disclosure also provide a storage medium, storing an executable program. The executable program implements the method for establishing relay connection performed by the above remote UE when being executed by a processor.

The embodiments of the disclosure also provide a storage medium, storing an executable program. The executable program implements the method for establishing relay connection performed by the above network device when being executed by a processor.

The embodiments of the disclosure also provide a computer program product, which includes a computer program instruction. The computer program instruction causes a computer to perform the method for establishing relay connection performed by the above relay UE.

The embodiments of the disclosure also provide a computer program product, which includes a computer program instruction. The computer program instruction causes a computer to perform the method for establishing relay connection performed by the above remote UE.

The embodiments of the disclosure also provide a computer program product, which includes a computer program instruction. The computer program instruction causes a computer to perform the method for establishing relay connection performed by the above network device.

The embodiments of the disclosure also provide a computer program. The computer program causes a computer to perform the method for establishing relay connection performed by the above relay UE.

The embodiments of the disclosure also provide a computer program. The computer program causes a computer to perform the method for establishing relay connection performed by the above remote UE.

The embodiments of the disclosure also provide a computer program. The computer program causes a computer to perform the method for establishing relay connection performed by the above network device.

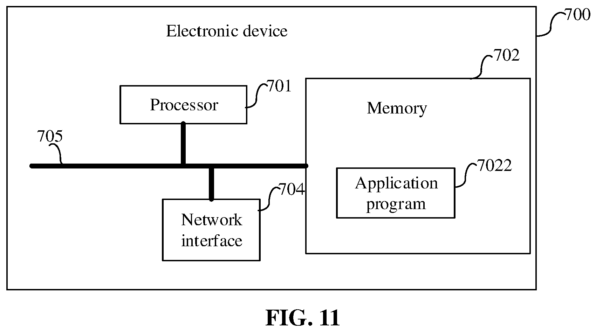

FIG. 11 is a schematic diagram of hardware composition structure of an electronic device (a relay UE, a remote UE or a network device) according to an embodiment of the disclosure. The electronic device 700 includes at least one processor 701, a memory 702, and at least one network interface 704. Various components of the electronic device 700 are coupled together through a bus system 705. It is to be understood that the bus system 705 is configured to implement connection and communication between these components. In addition to the data bus, the bus system 705 further includes a power bus, a control bus and a state signal bus. However, for clarity of illustration, the various buses are labeled as the bus system 705 in FIG. 11.

It is to be understood that the memory 702 may be a volatile memory or a non-volatile memory, or may include both the volatile and non-volatile memories. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an optical disk or a Compact Disc Read-Only Memory (CD-ROM); and the magnetic surface memory may be a magnetic disk memory or a magnetic tape memory. The volatile memory may be a RAM that acts as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The memory 702 described in the embodiment of the disclosure is intended to include, but is not limited to, these and any other suitable types of memories.

The memory 702 in the embodiments of the disclosure is configured to store various types of data to support operation of the electronic device 700. Examples of such data include: any computer application operated on the electronic device 700, such as an application program 7022. A program for implementing the method in the embodiments of the disclosure may be included in the application program 7022.

The method disclosed in the embodiments of the disclosure may be applied to the processor 701, or may be implemented by the processor 701. The processor 701 may be an integrated circuit chip with signal processing capability. During implementation, the steps of the above method may be completed by hardware integrated logic circuits in the processor 701 or instructions in the form of software. The above processor 701 may be a general-purpose processor, a Digital Signal Processor (DSP), or other programmable logic devices, discrete gate or transistor logic devices, discrete hardware components, etc. The processor 701 may implement or perform various methods, steps, and logical block diagrams disclosed in the embodiments of the disclosure. The general-purpose processor may be a microprocessor or any conventional processor, etc. In combination with the method disclosed in the embodiments of the disclosure, the steps may be directly implemented by a hardware processor, or may be performed by a combination of hardware and software modules in the decoding processor. The software module may be located in a storage medium. The storage medium is located in the memory 702, and the processor 701 reads information in the memory 702 and completes the steps of the method in combination with hardware.

In an exemplary embodiment, the electronic device 700 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, MCUs, MPUs, or other electronic elements for performing the above methods.

The disclosure is described with reference to flowcharts and/or block diagrams of the method, the device (system) and the computer program product according to the embodiments of the disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific manner, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

It is to be understood that the terms "system" and "network" herein are usually interchangeable herein. As used herein, term "and/or" is only an association relationship describing associated objects, and represents that three relationships may exist. For example, A and/or B may represent three conditions: i.e., existence of only A, existence of both A and B, and existence of only B. In addition, character "/" herein usually represents that previous and next associated objects form an "or" relationship.

## Claims

1. A method for establishing relay connection, comprising:
sending (S201), by a relay User Equipment, UE, a first connection establishment request message to a network device;
wherein the first connection establishment request message carries a connection establishment cause value, and the first connection establishment request message is configured to request an establishment of a Radio Resource Control, RRC, connection between the relay UE and the network device;
wherein the method further comprises:
receiving, by the relay UE, first information sent by a remote UE, wherein the first information triggers the relay UE to establish the RRC connection with the network device;
wherein the connection establishment cause value is directly sent to an Access Stratum, AS, entity of the relay UE by the remote UE; and
**characterized in that** the method further comprises:
filling directly, by the AS entity of the relay UE, the connection establishment cause value into the first connection establishment request message.

2. The method of claim 1, wherein the first information comprises:
an RRC message.

3. The method of claim 1 or 2, comprising:
receiving, by the relay UE, connection establishment success indication information sent by the network device.

4. The method of claim 3, further comprising:
sending, by the relay UE, first indication information to the network device, the first indication information being configured to indicate related information of a Sidelink, SL, between the relay UE and the remote UE.

5. The method of claim 4, wherein the related information of the SL comprises at least one of:
Quality of Service, QoS, parameters and QoS profile related to New Radio, NR, sidelink communication, a sidelink radio link failure or sidelink RRC reconfiguration failure has been detected, sidelink UE capability information of an associated peer UE for unicast communication, or Radio Link Control, RLC, mode information of a sidelink data radio bearer received from the associated peer UE for unicast communication.

6. The method of any one of claims 3-5, further comprising:
receiving, by the relay UE, first configuration information sent by the network device, the first configuration information being used for the relay UE and the remote UE to transmit information.

7. The method of any one of claims 1-6, further comprising:
sending, by the relay UE, second information to the network device based on the first information.

8. The method of claim 1 or 2, comprising:
receiving, by the relay UE, connection establishment failure indication information sent by the network device.

9. The method of claim 8, further comprising:
sending, by the relay UE, the connection establishment failure indication information to the remote UE.

10. The method of any one of claims 1-9, wherein the relay UE adopts a manner of a layer 2 relay to establish the connection with the network device; and/or
the remote UE establishes a connection with the relay UE through a sidelink.

11. A method for establishing relay connection, comprising:
sending (S301), by a remote User Equipment, UE, first information to a relay UE, such that the relay UE sends a first connection establishment request message to a network device,
wherein the first connection establishment request message carries a connection establishment cause value and is configured to request an establishment of a Radio Resource Control, RRC, connection between the relay UE and the network device, and the first information triggers the relay UE to establish the RRC connection with the network device; and
wherein the connection establishment cause value is directly sent by the remote UE to an Access Stratum, AS, entity of the relay UE, **characterized in that** the connection establishment request message is filled directly by the AS entity of the relay UE**.**

12. A method for establishing relay connection comprising:
receiving (S401), by a network device, a first connection establishment request message sent by a relay User Equipment, UE,
wherein the first connection establishment request message carries a connection establishment cause value, and the first connection establishment request message is configured to request an establishment of a Radio Resource Control, RRC, connection between the relay UE and the network device, and
wherein the connection establishment cause value is directly sent by the remote UE to an Access Stratum, AS, entity of the relay UE, and **characterized in that** the connection establishment request message is filled directly by the AS entity of the relay UE.

13. A relay User Equipment, UE, comprising:
a first sending unit (601), configured to send a first connection establishment request message to a network device;
wherein the first connection establishment request message carries a connection establishment cause value, and the first connection establishment request message is configured to request an establishment of a Radio Resource Control, RRC, connection between the relay UE and the network device;
wherein the relay UE further comprises:
a first receiving unit (602), configured to receive first information sent by a remote UE, wherein the first information triggers the relay UE to establish the RRC connection with the network device; and
wherein the connection establishment cause value is directly sent by the remote UE to an Access Stratum, AS, entity of the relay UE, and **characterized in that** the first connection establishment request message is filled directly by the AS entity of the relay UE.

## Patentansprüche

1. Verfahren zum Einrichten einer Weitergabeverbindung, umfassend:
Senden (S201) einer ersten Anforderungsnachricht für eine Verbindungseinrichtung von einem Weitergabebenutzergerät, Weitergabe-UE, zu einer Netzwerkvorrichtung;
wobei die erste Anforderungsnachricht für eine Verbindungseinrichtung einen Verursachungswert für eine Verbindungseinrichtung mitführt, und wobei die erste Anforderungsnachricht für eine Verbindungseinrichtung konfiguriert ist zum Anfordern eines Einrichtens einer Funkressourcensteuerungsverbindung, RRC-Verbindung, zwischen dem Weitergabe-UE und der Netzwerkvorrichtung;
wobei das Verfahren außerdem umfasst:
Empfangen, in dem Weitergabe-UE, von ersten Informationen, die von einem fernen UE gesendet werden,
wobei die ersten Informationen das Weitergabe-UE triggern, um die RRC-Verbindung mit der Netzwerkvorrichtung einzurichten;
wobei der Verursachungswert für eine Verbindungseinrichtung direkt von dem fernen UE zu einer Zugangsebenenentität, AS-Entität, des Weitergabe-UE gesendet wird; und
**dadurch gekennzeichnet, dass** das Verfahren außerdem umfasst:
direktes Einfügen, durch die AS-Entität des Weitergabe-UE, des Verursachungswerts für eine Verbindungseinrichtung in die erste Anforderungsnachricht für eine Verbindungseinrichtung.

2. Verfahren nach Anspruch 1, wobei die ersten Informationen umfassen:
eine RRC-Nachricht.

3. Verfahren nach Anspruch 1 oder 2, umfassend:
Empfangen, in dem Weitergabe-UE, von Anzeigeinformationen eines Verbindungseinrichtungserfolgs, die von der Netzwerkvorrichtung gesendet werden.

4. Verfahren nach Anspruch 3, das außerdem umfasst:
Senden von ersten Anzeigeinformationen von dem Weitergabe-UE zu der Netzwerkvorrichtung, wobei die ersten Anzeigeinformationen konfiguriert sind zum Anzeigen zugehöriger Informationen eines Sidelinks, SL, zwischen dem Weitergabe-UE und dem fernen UE.

5. Verfahren nach Anspruch 4, wobei die zugehörigen Informationen des SL mindestens eines umfassen von:
Dienstgüteparametern, QoS-Parametern, und ein QoS-Profil, die sich auf eine New-Radio-Sidelink-Kommunikation, NR-Sidelink-Kommunikation, beziehen, wobei ein Sidelink-Funkverbindungsfehler oder ein Sidelink-RRC-Neukonfigurationsfehler erkannt wurden; Informationen über eine Sidelink-UE-Fähigkeit eines assoziierten Peer-UE für eine Unicast-Kommunikation;
oder Informationen über einen Funkverbindungssteuerungsmodus, RLC-Modus, eines Sidelink-Datenfunkträgers, die von dem assoziierten Peer-UE für eine Unicast-Kommunikation empfangen wurden.

6. Verfahren nach einem der Ansprüche 3 bis 5, das außerdem umfasst:
Empfangen, in dem Weitergabe-UE, von ersten Konfigurationsinformationen, die von der Netzwerkvorrichtung gesendet werden, wobei die ersten Konfigurationsinformationen für das Weitergabe-UE und das ferne UE verwendet werden, um Informationen zu übertragen.

7. Verfahren nach einem der Ansprüche 1 bis 6, das außerdem umfasst:
Senden von zweiten Anzeigeinformationen von dem Weitergabe-UE zu der Netzwerkvorrichtung basierend auf den ersten Informationen.

8. Verfahren nach Anspruch 1 oder 2, umfassend:
Empfangen, in dem Weitergabe-UE, von Anzeigeinformationen eines Verbindungseinrichtungsfehlers, die von der Netzwerkvorrichtung gesendet werden.

9. Verfahren nach Anspruch 8, das außerdem umfasst:
Senden von Anzeigeinformationen eines Verbindungseinrichtungsfehlers von dem Weitergabe-UE zu dem fernen UE.

10. Verfahren nach einem der Ansprüche 1 bis 9, wobei das Weitergabe-UE eine Weise einer Schicht-2-Weitergabe übernimmt, um die Verbindung mit der Netzwerkvorrichtung einzurichten, und/oder
wobei das ferne UE durch einen Sidelink eine Verbindung mit dem Weitergabe-UE einrichtet.

11. Verfahren zum Einrichten einer Weitergabeverbindung, umfassend:
Senden (S301) von ersten Informationen von einem fernen Benutzergerät, UE, zu einem Weitergabe-UE, sodass das Weitergabe-UE eine erste Anforderungsnachricht für eine Verbindungseinrichtung zu einer Netzwerkvorrichtung sendet,
wobei die erste Anforderungsnachricht für eine Verbindungseinrichtung einen Verursachungswert für eine Verbindungseinrichtung mitführt und konfiguriert ist zum Anfordern eines Einrichtens einer Funkressourcensteuerungsverbindung, RRC-Verbindung, zwischen dem Weitergabe-UE und der Netzwerkvorrichtung, und wobei die ersten Informationen das Weitergabe-UE triggern, um die RRC-Verbindung mit der Netzwerkvorrichtung einzurichten; und
wobei der Verursachungswert für eine Verbindungseinrichtung direkt von dem fernen UE zu einer Zugangsebenenentität, AS-Entität, des Weitergabe-UE gesendet wird, **dadurch gekennzeichnet, dass** die Anforderungsnachricht für eine Verbindungseinrichtung direkt von der AS-Entität des Weitergabe-UE eingefügt wird.

12. Verfahren zum Einrichten einer Weitergabeverbindung, umfassend:
Empfangen (S401), in einer Netzwerkvorrichtung, einer ersten Anforderungsnachricht für eine Verbindungseinrichtung, die von einem Weitergabebenutzergerät, Weitergabe-UE, gesendet wird,
wobei die erste Anforderungsnachricht für eine Verbindungseinrichtung einen Verursachungswert für eine Verbindungseinrichtung mitführt, und wobei die erste Anforderungsnachricht für eine Verbindungseinrichtung konfiguriert ist zum Anfordern eines Einrichtens einer Funkressourcensteuerungsverbindung, RRC-Verbindung, zwischen dem Weitergabe-UE und der Netzwerkvorrichtung, und
wobei der Verursachungswert für eine Verbindungseinrichtung direkt von dem fernen UE zu einer Zugangsebenenentität, AS-Entität, des Weitergabe-UE gesendet wird, und **dadurch gekennzeichnet, dass** die Anforderungsnachricht für eine Verbindungseinrichtung direkt von der AS-Entität des Weitergabe-UE eingefügt wird.

13. Weitergabebenutzergerät, Weitergabe-UE, umfassend:
eine erste Sendeeinheit (601), die konfiguriert ist zum Senden einer ersten Anforderungsnachricht für eine Verbindungseinrichtung zu einer Netzwerkvorrichtung;
wobei die erste Anforderungsnachricht für eine Verbindungseinrichtung einen Verursachungswert für eine Verbindungseinrichtung mitführt, und wobei die erste Anforderungsnachricht für eine Verbindungseinrichtung konfiguriert ist zum Anfordern eines Einrichtens einer Funkressourcensteuerungsverbindung, RRC-Verbindung, zwischen dem Weitergabe-UE und der Netzwerkvorrichtung;
wobei das Weitergabe-UE außerdem umfasst:
eine erste Empfangseinheit (602), die konfiguriert ist zum Empfangen von ersten Informationen, die von einem fernen UE gesendet werden, wobei die ersten Informationen das Weitergabe-UE triggern, um die RRC-Verbindung mit der Netzwerkvorrichtung einzurichten; und
wobei der Verursachungswert für eine Verbindungseinrichtung direkt von dem fernen UE zu einer Zugangsebenenentität, AS-Entität, des Weitergabe-UE gesendet wird, und **dadurch gekennzeichnet, dass** die erste Anforderungsnachricht für eine Verbindungseinrichtung direkt von der AS-Entität des Weitergabe-UE eingefügt wird.

## Revendications

1. Procédé d'établissement d'une connexion de relais, comprenant :
l'envoi (S201), par un équipement utilisateur, UE, relais, d'un premier message de demande d'établissement de connexion à un dispositif de réseau ;
dans lequel le premier message de demande d'établissement de connexion contient une valeur de cause d'établissement de connexion, et le premier message de demande d'établissement de connexion est configuré pour demander un établissement d'une connexion de commande des ressources radio, RRC, entre l'UE relais et le dispositif de réseau ;
dans lequel le procédé comprend en outre :
la réception, par l'UE relais, de premières informations envoyées par un UE distant, dans lequel les premières informations déclenchent l'établissement par l'UE relais de la connexion RRC avec le dispositif de réseau ;
dans lequel la valeur de cause d'établissement de connexion est directement envoyée à une entité de strate d'accès, AS, de l'UE relais par l'UE distant ; et
**caractérisé en ce que** le procédé comprend en outre :
le remplissage direct, par l'entité AS de l'UE relais, du premier message de demande d'établissement de connexion avec la valeur de cause d'établissement de connexion.

2. Procédé selon la revendication 1, dans lequel les premières informations comprennent :
un message RRC.

3. Procédé selon la revendication 1 ou 2, comprenant :
la réception, par l'UE relais, d'informations d'indication de réussite d'établissement de connexion envoyées par le dispositif de réseau.

4. Procédé selon la revendication 3, comprenant en outre :
l'envoi, par l'UE relais, de premières informations d'indication au dispositif de réseau, les premières informations d'indication étant configurée pour indiquer des informations connexes d'une liaison latérale, SL, entre l'UE relais et l'UE distant.

5. Procédé selon la revendication 4, dans lequel les informations connexes de la SL comprennent au moins l'un parmi :
des paramètres de qualité de service, QoS, et le profil de QoS relatifs à la communication de liaison latérale Nouvelle Radio, NR, la détection d'une défaillance de liaison radio de liaison latérale ou d'un échec de reconfiguration RRC de liaison latérale, des informations de capacité d'UE de liaison latérale d'un UE homologue associé pour une communication en monodiffusion, ou des informations de mode de commande de liaison radio, RLC, d'un support radio de données de liaison latérale reçues à partir de l'UE homologue associé pour une communication en monodiffusion.

6. Procédé selon l'une quelconque des revendications 3 à 5, comprenant en outre :
la réception, par l'UE relais, de premières informations de configuration envoyées par le dispositif de réseau,
les premières informations de configuration étant utilisées par l'UE relais et l'UE distant pour transmettre des informations.

7. Procédé selon l'une quelconque des revendications 1 à 6, comprenant en outre :
l'envoi, par l'UE relais, de secondes informations au dispositif de réseau sur la base des premières informations.

8. Procédé selon la revendication 1 ou 2, comprenant :
la réception, par l'UE relais, d'informations d'indication d'échec d'établissement de connexion envoyées par le dispositif de réseau.

9. Procédé selon la revendication 8, comprenant en outre :
l'envoi, par l'UE relais, des informations d'échec d'établissement de connexion à l'UE distant.

10. Procédé selon l'une quelconque des revendications 1 à 9, dans lequel l'UE relais adopte le comportement d'un relais de couche 2 pour établir la connexion avec le dispositif de réseau ; et/ou
l'UE distant établit une connexion avec l'UE relais par l'intermédiaire d'une liaison latérale.

11. Procédé d'établissement d'une connexion de relais, comprenant :
l'envoi (S301), par un équipement utilisateur, UE, distant de premières informations à un UE relais, de sorte que l'UE relais envoie un premier message de demande d'établissement de connexion à un dispositif de réseau,
dans lequel le premier message de demande d'établissement de connexion contient une valeur de cause d'établissement de connexion et est configuré pour demander l'établissement d'une connexion de commande des ressources radio, RRC, entre l'UE relais et le dispositif de réseau, et les premières informations déclenchent l'établissement par l'UE relais de la connexion RRC avec le dispositif de réseau ; et
dans lequel la valeur de cause d'établissement de connexion est directement envoyée par l'UE distant à une entité de strate d'accès, AS, de l'UE relais, **caractérisé en ce que** le message de demande d'établissement de connexion est rempli directement par l'entité AS de l'UE relais.

12. Procédé d'établissement d'une connexion de relais, comprenant :
la réception (S401), par un dispositif de réseau, d'un premier message de demande d'établissement de connexion envoyé par un équipement utilisateur, UE, relais,
dans lequel le premier message de demande d'établissement de connexion contient une valeur de cause d'établissement de connexion, et le premier message de demande d'établissement de connexion est configuré pour demander un établissement d'une connexion de commande des ressources radio, RRC, entre l'UE relais et le dispositif de réseau, et
dans lequel la valeur de cause d'établissement de connexion est directement envoyée par l'UE distant à une entité de strate d'accès, AS, de l'UE relais, et
**caractérisé en ce que** le message de demande d'établissement de connexion est rempli directement par l'entité AS de l'UE relais.

13. Équipement utilisateur, UE, relais comprenant :
une première unité d'envoi (601), configurée pour envoyer un premier message de demande d'établissement de connexion à un dispositif de réseau ;
dans lequel le premier message de demande d'établissement de connexion contient une valeur de cause d'établissement de connexion, et le premier message de demande d'établissement de connexion est configuré pour demander un établissement d'une connexion de commande des ressources radio, RRC, entre l'UE relais et le dispositif de réseau ;
dans lequel l'UE relais comprend en outre :
une première unité de réception (602), configurée pour recevoir de premières informations envoyées par un UE distant, dans lequel les premières informations déclenchent l'établissement par l'UE relais de la connexion RRC avec le dispositif de réseau ; et
dans lequel la valeur de cause d'établissement de connexion est directement envoyée par l'UE distant à une entité de strate d'accès, AS, de l'UE relais, et
**caractérisé en ce que** le premier message de demande d'établissement de connexion est rempli directement par l'entité AS de l'UE relais.
